# EUROPEAN PATENT APPLICATION

(11) **EP 1 559 329 A2**
(43) Date of publication of application: **03.08.2005**
(21) Application number: 05075133.8
(22) Date of filing: 19.01.2005
(51) Int. Cl.: A23L 1/00, A23L 1/164, A23L 1/182, A23P 1/12, A23P 1/08, A23L 1/216

(54) **Filled rice or potato products and the process for their preparation**

(30) Priority: 23.01.2004 EP 04250373
(71) Applicant: UNILEVER PLC, London EC4P 4BQ (GB); UNILEVER N.V., 3013 AL Rotterdam (NL)
(72) Inventor: Cocco, Antonio, Sagit s.r.l. Unilever Italia, 04012 Cisterna di Latina (IT); Eurlings, Robert Maria Joseph Hubert, Iglomora, 6222 NZ Maastricht (NL); Hecker, Lucas Paulus Elizabeth Marie, Iglomora, 6222 NZ Maastricht (NL); Panaioli, Sandro, Sagit s.r.l. Unilever Italia, 04012 Cisterna di Latina (IT); Treggiari, Massimiliano, Sagit s.r.l. Unilever, 04012 Cisterna di Latina (IT)
(74) Representative: Acham, Nicholas Clive

(57) **Abstract**

Frozen food products are provided comprising a rice or potato composition. The rice or potato composition forms an envelope filled with a sauce component, the sauce component being distributed along the full length of the rice or potato envelope. Also provided is a process for manufacturing the products.

## Description

The present invention relates to a food product and a process for the preparation thereof. In particular the present invention relates to filled rice or potato products which contain a sauce component.

Filled rice or potato products are known in the art and widely available to the consumer as ready prepared frozen food products. Their short preparation time makes them particularly suited to the busy lifestyles of an increasing number of consumers today.

A filled rice product of the prior art is known in Italy as 'suppli'. 'Suppli' typically comprises a sausage-shaped mass of rice filled with a cheese sauce.

One problem with filled rice or potato products such as 'suppli' is that when a consumer bites into the prepared product, the consumer is often confronted with a mouthful of the product consisting exclusively of rice or potato rather that a combination of rice or potato and cheese sauce.

It has been found, by way of the present invention, that the solution to this problem resides in providing, in a first aspect, a frozen food product comprising a rice or potato composition, the rice or potato composition forming an envelope, said envelope filled with a sauce component, the sauce component being distributed along the full length of the rice envelope.

Where the product comprises a rice composition, the rice composition includes partially cooked rice. By "partially cooked" is meant that the rice grains have a water content of between 0.5 and 2 times the dry weight of the grains, preferably between 1 and 1.5 times. The inventors have observed that the grains of rice in such a product are substantially intact. Whilst not wishing to be bound by theory, the inventors believe that only partially cooking the rice plays a role in maintaining the integrity of the rice grains during the manufacturing process.

The term envelope is defined, for the purposes of the present invention, as an article which envelopes part or all of another article.

The sauce component may comprise cheese, preferably mozzarella.

The frozen food may comprise more than 5% weight on weight cheese. The inventors have observed that a product comprising more than 5% cheese has superior organoleptic qualities. Preferably the frozen food comprises more than 7.5% weight on weight cheese. In particular, the frozen food product comprises 8-12% weight on weight cheese, desirably 10% weight on weight.

The frozen food product may be configured as a half-moon. The inventors have observed that this configuration permits the food product to be reheated more quickly than the typical sausage-shaped 'suppli'.

In a second aspect of the invention, a process for manufacturing a food product in accordance with the invention is provided comprising the steps of:
a. coaxially co-extruding the rice or potato composition and sauce component thereby to form a continuous extrudate, the rice or potato composition being located radially exterior to the sauce component;
b. cutting the continuous extrudate into uniform portions;
c. mechanically forming the uniform portions into formed portions of desired shape and;
d. freezing the formed portions.

The process may comprise the further step of coating the unfrozen formed portions in batter. The process may also comprise the further step of coating the unfrozen battered formed portions in breadcrumb. The process may furthermore comprise the step of partially cooking the unfrozen battered formed portions coated in breadcrumb.

By "mechanically forming" is meant that the uniform portions are permanently deformed in at least two dimensions, preferably at least three dimensions. Preferably the mechanical forming is such that each uniform portion is deformed by at least 5%, preferably at least 10%, most preferably at least 20% of the un-deformed size in at least one dimension.

The step of mechanical forming may be operated in such a way as to maintain the longitudinal dimension of the sauce component before and after forming. Such a forming operation minimises the deformation of the sauce component. This is particularly advantageous where the sauce component lacks formability because it is, for example, elastic. Mozzarella cheese is an example of an elastic material that is difficult to form.

In a third aspect, the invention provides a product obtainable or obtained by the process of the second aspect.

### Summary of the Drawings

The invention is exemplified hereinbelow with reference to the figures where:
- FIGURE 1: shows top (a), side (b), perspective (c) and end (d) views of a food product in accordance with the invention; and
- FIGURE 2: shows the forming operation of a process of manufacturing a food product in accordance with the invention.

### Detailed Description

In a first embodiment of the invention, the food product consists of the following:

| | |
|---|---|
| Risotto | 700.000 kg |
| Mozzarella cheese | 100.000 kg |
| Batter | 80.000 kg |
| Breadcrumb | 120.000 kg |

More specifically, the risotto consists of:

| | % weight on weight |
|---|---|
| Sunflower oil | 0.8000 |
| Extra virgin olive oil | 1.6100 |
| Onions | 1.6100 |
| Parboiled rice | 16.0880 |
| Peeled crushed tomatoes | 40.2160 |
| Beef meat extract | 0.3900 |
| Water | 27.3470 |
| Salt | 0.9700 |
| Parmesan cheese | 2.5700 |
| Eggs | 1.1600 |
| Wheat flour | 7.2390 |

The beef meat extract can be obtained from Gebroeders Zandbergen BV. The batter consists of:

| | % weight on weight |
|---|---|
| Wheat flour | 16.6500 |
| Rice flour | 11.1000 |
| Starch wheat | 3.3300 |
| Salt | 2.5900 |
| Dextrose | 1.8300 |
| Wheat protein | 1.4800 |
| Water | 63.0000 |

The breadcrumbs consist of:

| | % weights on weight |
|---|---|
| Wheat flour | 95.9200 |
| Salt | 1.7000 |
| Raising agent | 1.2000 |
| Natural yeast | 0.2000 |
| Paprika | 0.6300 |
| Malt extract | 0.0300 |
| Skimmed milk powder | 0.3200 |

The raising agent consists of sodium bicarbonate and sodium diphosphate and is available from Vaessen-Schoenmaker.

The risotto is prepared by heating the sunflower oil and extra virgin oil for 5 minutes. The onions are then added and cooked until the water has been driven off.

9% weight by weight of the water is then added hot (50 degrees Centigrade) together with the peeled crushed tomatoes, beef meat extract and salt. The mixture is heated continually until the temperature reaches 90°C at which point the remaining water is added cold (25 degrees Centigrade) together with the wheat flour and egg.

Once again, the mixture is heated until the temperature reaches 90°C at which point the parmesan cheese is stirred into the mixture for 1 minute without further heating. The parboiled rice is then stirred into the mixture for a further minute without heat.

The mixture is then left to stand without further heating for 10 minutes and then stored in a chilled room at 6°C.

The batter and breadcrumbs are prepared by mixing the aforementioned listed ingredients.

The mozzarella is coaxially co-extruded with the risotto at 6°C, the mozzarella comprising a filling forming a continuous extrudate. The extrudate then passes through a cutting machine which cuts the extrudate into portions of uniform length and separates each portion one from the other. Separation is achieved by placing the cutting operation between two endless belt conveyors arranged in series and operating the upstream conveyor at a slightly lower belt speed than the downstream conveyor.

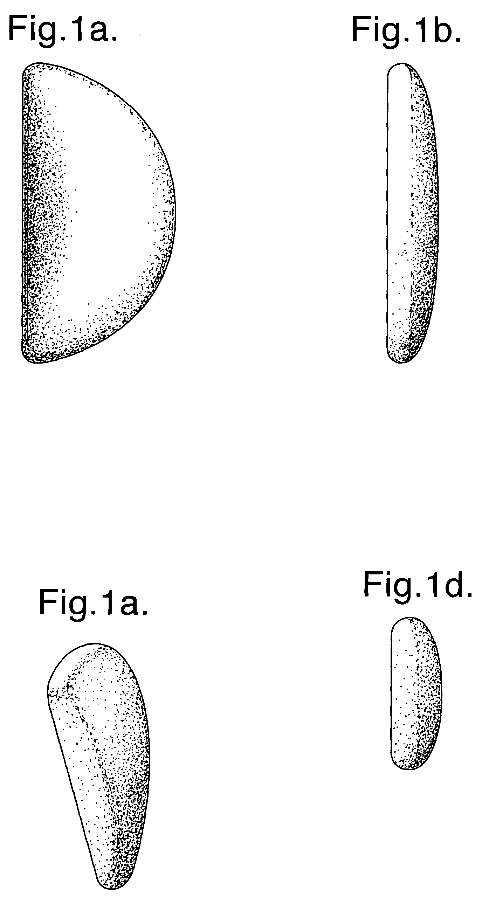

The portions then enter a mechanical forming machine (Masterform ™ from Nijal SA) where they are individually formed into a characteristic half-moon shape which is illustrated in Figures 1a to 1d.

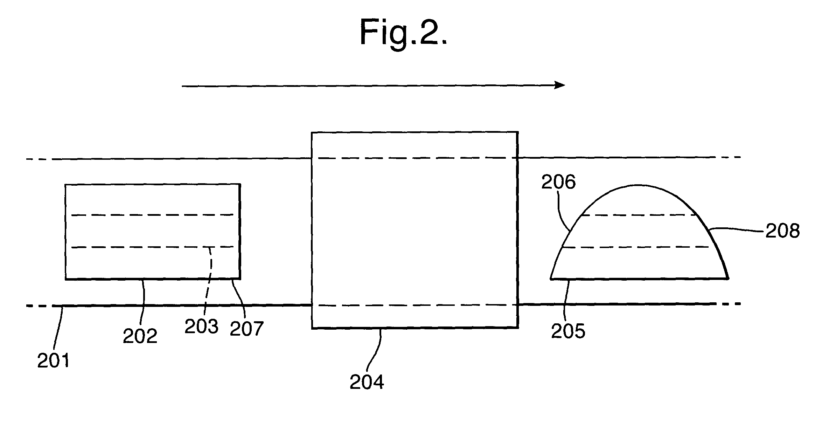

This is accomplished as shown in Figure 2 which shows an endless belt conveyor (201) conveying portions (202) in the direction indicated by the arrow. The portions (202) comprise risotto (207) filled with mozzarella (203), the mozzarella (203) arranged longitudinally and thus in parallel with the direction of movement of the conveyor.

The conveyor (201) conveys each portion (202) into the mechanical forming machine (204) where it is formed into the characteristic half-moon shape (205). The orientation of the mozzarella (203) is preserved with mozzarella just visible at opposing ends of the formed portions (206, 208). The forming operation is executed in such a manner as to preserve the longitudinal dimension of the portion before and after forming.

Thereafter, the moulded portions are coated successively in batter and breadcrumbs before being deep-fried at 180 degrees Centigrade for 45 seconds. The moulded portions emerge from the deep fryer semi-cooked and are then stored at -18°C ready for transhipment.

In tests on reheating times from frozen, the following results were obtained for a 62g half-moon shaped food product prepared by the process of the invention as against a frozen sausage-shaped 'suppli' of identical weight.

| | Shallow frying | Deep frying | Oven |
|---|---|---|---|
| Food product | 8 | 6 | 12 |
| Of invention | | | |
| 'Suppli' | 15 | 12 | 25 |
| (sausage-shaped) | | | |

The half-moon shaped food product was observed to re-heat from frozen approximately twice as quickly as a frozen sausage-shaped 'suppli' of identical weight.

In a second embodiment of the invention, the food product consists of the following:

| | % weight on weight |
|---|---|
| Potato mix | 55.0 |
| Sauce | 12.0 |
| Batter | 12.0 |
| Bread crumb | 12.0 |
| Sunflower oil | 9.0 |

More specifically, the potato mix consists of:

| | % weight on weight |
|---|---|
| Potato mash | 76.80 |
| Butter | 1.30 |
| Salt | 1.40 |
| Sunflower oil | 2.70 |
| Nut meg | 0.03 |
| White pepper | 0.03 |
| Potato flake | 8.50 |
| Skimmed milk powder | 0.40 |
| Parmesan cheese | 6.00 |
| Whole egg powder | 0.40 |
| Rice starch | 2.40 |
| Turmeric | 0.04 |

The sauce consists of:

| | % weight on weight |
|---|---|
| Cooked ham | 30 |
| Mozzarella cheese | 70 |

The batter and breadcrumbs are as described for the first embodiment.

The potato mix is prepared by first cooking the potato mash which is then cooled from the cooking temperature (around 85-95°C) down to 1-5°C in less then 20 minutes by means of a cooling tunnel. The chilled mash is then mixed together with the other ingredients to make the potato mix.

The sauce is prepared by mixing together previously diced 6 x 6 x 6 mm pieces of both the cooked ham and mozzarella cheese.

The sauce is coaxially co-extruded with the potato mix to form a continuous extrudate. The extrudate is then processed in an identical manner to the extrudate of the first embodiment.

## Claims

1. A frozen food product comprising a rice composition including partially cooked rice, the rice composition forming an envelope, said envelope filled with a sauce component, the sauce component being distributed along the full length of the rice envelope.

2. A frozen food product comprising a potato composition, the potato composition forming an envelope, said envelope filled with a sauce component, the sauce component being distributed along the full length of the potato envelope.

3. A frozen food product in accordance with claim 1 or claim 2 wherein the sauce component comprises cheese.

4. A frozen food product in accordance with claim 3 wherein the product comprises more than 5% weight on weight cheese.

5. A frozen food product in accordance with claim 4 wherein the product comprises more than 7.5% weight on weight cheese.

6. A frozen food product in accordance with claim 5 wherein the product comprises 8-12% weight on weight cheese.

7. A frozen food product in accordance with claim 6 wherein the product comprises 10% weight on weight cheese.

8. A frozen food product in accordance with any one of claims 3 to 7 wherein the cheese is mozzarella.

9. A frozen food product in accordance with any one of the preceding claims wherein the product is configured as a half-moon.

10. A process for manufacturing a food product in accordance with any one of claims 1 to 9 comprising the steps of:
a. coaxially co-extruding the rice or potato composition and sauce component thereby to form a continuous extrudate, the rice or potato composition being located radially exterior to the sauce component;
b. cutting the continuous extrudate into uniform portions;
c. mechanically forming the uniform portions into formed portions of desired shape and;
d. freezing the formed portions.

11. A process in accordance with claim 10 comprising the further step of coating the unfrozen formed portions in batter.

12. A process in accordance with claim 11 comprising the further step of coating the unfrozen battered formed portions in breadcrumb.

13. A process in accordance with claim 12 comprising the further step of partially cooking the unfrozen battered formed portions coated in breadcrumb.

14. A process in accordance with any one of claims 10 to 13 comprising the further step of preparing the rice composition for extrusion by partially cooking the rice.

15. A process in accordance with any one of claims 10 to 14 wherein the step of mechanical forming maintains the longitudinal dimension of the sauce component before and after forming.

16. A product obtainable by the process of any one of claims 10 to 15.
